# EUROPEAN PATENT APPLICATION

(11) **EP 4 733 930 A1**
(43) Date of publication of application: **29.04.2026**
(21) Application number: 24825501.0
(22) Date of filing: 27.02.2024
(51) Int. Cl.: G06F 8/65

(54) **EDGE TERMINAL, SYSTEM, AND DATA PROCESSING METHOD**

(30) Priority: 21.06.2023 JP 2023101718
(71) Applicant: Konica Minolta, Inc., Tokyo 100-7015 (JP)
(72) Inventor: YOSHIDA, Okihisa, Tokyo 100-7015 (JP)
(74) Representative: MFG Patentanwälte Meyer-Wildhagen Meggle-Freund Gerhard PartG mbB
(86) International application number: PCT/JP2024/006965
(87) International publication number: WO 2024/262089

(57) **Abstract**

This edge terminal forms a first edge terminal in a system that includes: the first edge terminal that includes a machine-learned model and that processes acquired data; a second edge terminal that can be linked with the first edge terminal over a network; and a server that can be linked with the first edge terminal and the second edge terminal over the network. The edge terminal comprises: a reception unit that receives update information of specific software; and a processing request unit that, upon receiving the update information, requests the second edge terminal to perform substitution processing of the acquired data using the machine-learned model in the second edge terminal.

## Description

### Technical Field

The present disclosure relates to an edge terminal, a system, and a data processing method.

### Background Art

In recent years, edge terminals on which machine learning-trained models such as artificial intelligence (AI) models are mounted have been widely used for various services. For example, in an edge terminal including a sensor, a camera, and the like, acquired data is processed not by a server but by an AI model in the edge terminal. Thus, the server can acquire the processed data from the edge terminal. However, an edge terminal that processes data by using a machine learning-trained model has extremely few computational resources. For this reason, the edge terminal may have an insufficient region for deploying software when the update of the software overlaps the processing of the data. In this case, the edge terminal needs to temporarily stop its operation. For this reason, for example, in a case where a monitoring target is continuously monitored for 24 hours using an edge terminal, an appropriate service may not be provided.

In this respect, for example, Patent Literature (hereinafter referred to as "PTL") 1 discloses a software update control apparatus that constructs an operating environment after software update in a cloud-side system and causes an operating environment before the software update in an edge-side system to be moved to the cloud-side system.

### Citation List

### Patent Literatures

PTL 1
WO 2017/179537

### Summary of Invention

### Technical Problem

However, since the apparatus of PTL 1 constructs an operating environment of the edge-side system in the cloud-side system, the data processing amount in the cloud-side system may increase. For example, when the number of edge-side systems that update software increases, the data processing amount in the cloud-side system increases. In addition, the data transfer amount between the cloud-side system and the edge-side system may also increase. In addition, data congestion may occur in the cloud-side system.

An object of the present disclosure is to provide an edge terminal, a system, and a data processing method each of which updates software easily.

### Solution to Problem

An edge terminal according to the present disclosure is an edge terminal that forms a first edge terminal, which includes a machine learning-trained model and processes acquired data, in a system including: the first edge terminal; a second edge terminal that is linkable with the first edge terminal via a network; and a server that is linkable with the first edge terminal and the second edge terminal via the network. The edge terminal includes: a receiver that receives update information of specific software; and a processing requester that, upon receiving the update information, makes a request to the second edge terminal to perform alternative processing on the acquired data by using the machine learning-trained model in the second edge terminal.

A system according to the present disclosure includes: the first edge terminal described above; the second edge terminal described above; and the server described above. The second edge terminal includes: an alternative processor that performs alternative processing on the acquired data based on the request received from the first edge terminal; and a transferer that transfers processing data, on which the alternative processing has been performed, to the server.

A data processing method according to the present disclosure is a data processing method whereby a first edge terminal that includes a machine learning-trained model and processes acquired data processes the acquired data in a system including: the first edge terminal; a second edge terminal that is linkable with the first edge terminal via a network; and a server that is linkable with the first edge terminal and the second edge terminal via the network. The data processing method includes: receiving update information of specific software; and requesting, upon receiving the update information, the second edge terminal to perform alternative processing on the acquired data by using the machine learning-trained model in the second edge terminal.

### Advantageous Effects of Invention

According to the present disclosure, it is possible to update software easily.

### Brief Description of the Drawings

Fig. 1 is a diagram illustrating an outline of Embodiment 1;
Fig. 2 is a block diagram illustrating the functional configuration of a first edge terminal in Embodiment 1;
Fig. 3 is a block diagram illustrating the functional configuration of a second edge terminal in Embodiment 1;
Fig. 4 is a block diagram illustrating the hardware configuration of the first edge terminal in Embodiment 1;
Fig. 5 is a block diagram illustrating the software configuration of the first edge terminal in Embodiment 1;
Fig. 6 is a flowchart illustrating a method of processing acquired data by the first edge terminal in Embodiment 1;
Fig. 7 is a diagram illustrating a flow in which the first edge terminal processes the acquired data in Embodiment 1;
Fig. 8 is a diagram illustrating a flow of alternative processing that the first edge terminal requests the second edge terminal to perform in Embodiment 1;
Fig. 9 is a flowchart illustrating a method of processing acquired data by the second edge terminal in Embodiment 1;
Fig. 10 is a diagram illustrating a flow of alternative processing that the first edge terminal requests the second edge terminal to perform in a variation of Embodiment 1;
Fig. 11 is a diagram illustrating a link module activated in the same layer as an engine in Embodiment 2;
Fig. 12 is a diagram illustrating the link module activated in the same layer as an operating system in Embodiment 3; and
Fig. 13 is a block diagram illustrating the software configuration of the first edge terminal and the second edge terminal in Embodiment 4.

### Description of Embodiments

Hereinafter, embodiments of the present disclosure will be described with reference to the accompanying drawings.

### (Embodiment 1)

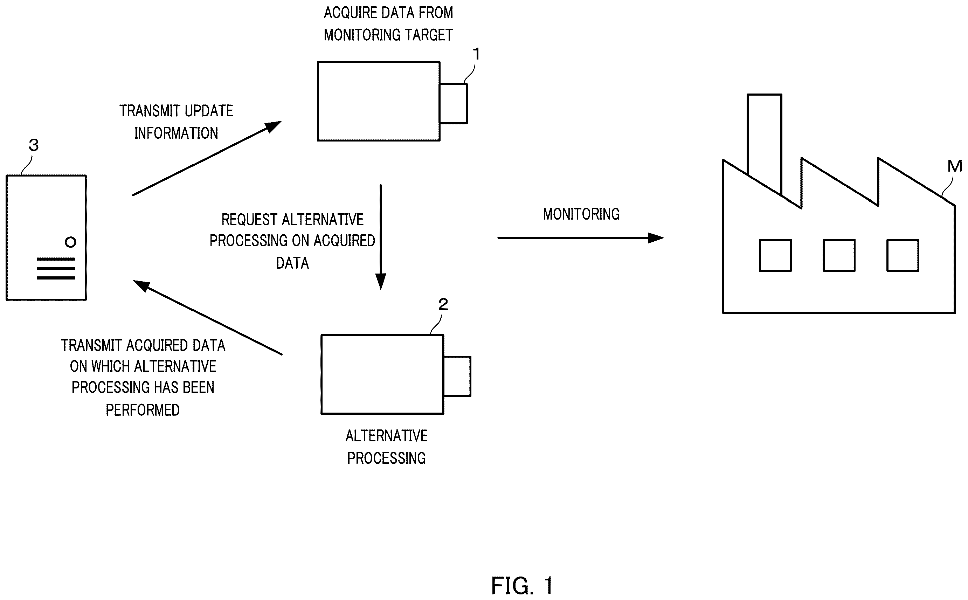

An outline of the present disclosure will be described. For example, as illustrated in Fig. 1, a case in which an edge terminal 1 and an edge terminal 2 are disposed for a monitoring target M and data is acquired from the monitoring target M is considered. Here, the edge terminals 1 and 2 may be formed of a camera, for example. That is, the edge terminals 1 and 2 image the monitoring target M and acquire imaging data thereof. Then, when the edge terminals 1 and 2 acquire the data, the edge terminals 1 and 2 performs processing on the acquired data by using a machine learning-trained model installed in advance, and transmit processing data, on which the processing has been performed, to a server 3. At this time, when update information is transmitted from the server 3, the edge terminal 1 may have insufficient computational resources temporarily.

In this respect, in the present disclosure, when the edge terminal 1 receives update information, the edge terminal 1 makes a request to the edge terminal 2 to perform alternative processing on the acquired data. When the edge terminal 2 receives the request for alternative processing, the edge terminal 2 performs the alternative processing on the acquired data based on the request. Then, the edge terminal 2 transmits the acquired data, on which the alternative processing has been performed, to the server 3.

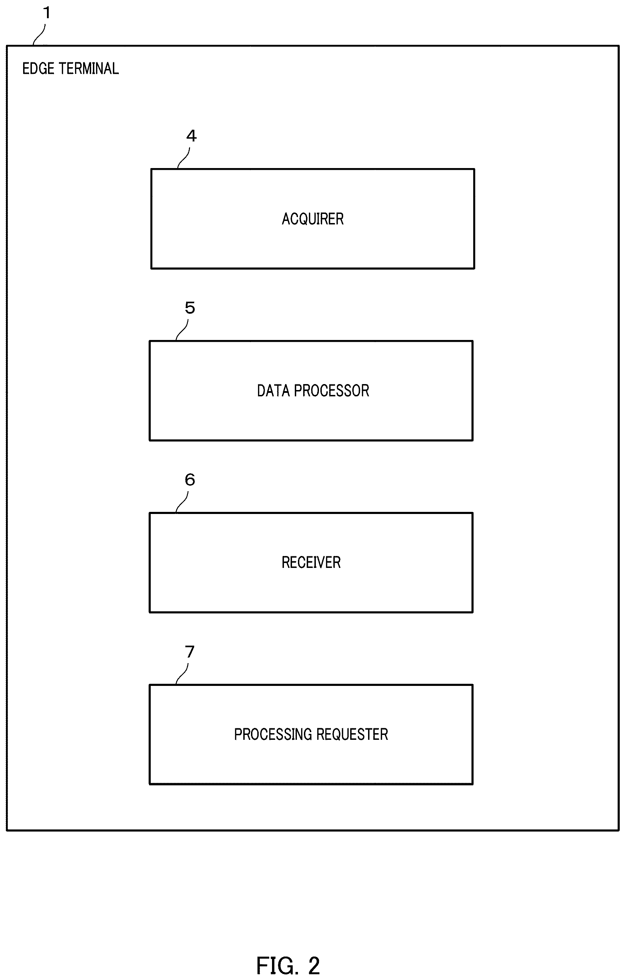

Next, the configuration of the edge terminal 1 will be described in detail. As illustrated in Fig. 2, the edge terminal 1 includes an acquirer 4, a data processor 5, a receiver 6, and a processing requester 7. The edge terminal 1 is connected to the edge terminal 2 and the server 3 via a network in a linkable manner.

The acquirer 4 acquires data and may be formed of, for example, a sensor such as a camera, a thermometer, a barometer, an accelerometer, a pressure gauge, or a gas detector. For example, the acquirer 4 may acquire imaging data obtained by imaging the monitoring target M for which the edge terminal 1 is installed. In addition, the edge terminal 1 may include a plurality of the acquirers 4 disposed therein.

The data processor 5 processes the acquired data acquired by the acquirer 4. Here, the data processor 5 may include a machine learning-trained model trained for a specific task (for example, target detection, abnormality detection, dangerousness detection, or the like). For example, the machine learning-trained model may output, in response to an input of acquired data obtained by imaging a worker who works at the monitoring target M, processing data obtained by determining the dangerousness of the behavior of the worker. Then, the data processor 5 may transmit the processing data to the server 3. Note that, examples of the acquired data include a captured image, temperature, atmospheric pressure, acceleration, pressure, and the type of gas.

The receiver 6 receives update information of specific software, which has been installed in the edge terminal 1, from the server 3. The receiver 6 may be formed of, for example, a communication apparatus that communicates with the edge terminal 2 and the server 3 via a network.

When update information is received, the processing requester 7 requests the edge terminal 2 to perform alternative processing on the acquired data by using a machine learning-trained model in the edge terminal 2. Here, it is assumed that the edge terminal 2 includes a machine learning-trained model having a data processing function equivalent to that in the edge terminal 1. For example, the processing requester 7 may temporarily stop processing the acquired data by using the machine learning-trained model in response to the reception of the update information. Then, the processing requester 7 may request the edge terminal 2 to process the acquired data during the update.

Here, the request for alternative processing includes processing information of the acquired data, and may include, for example, a processing procedure of the acquired data, resource information necessary for the processing of the acquired data, and the like.

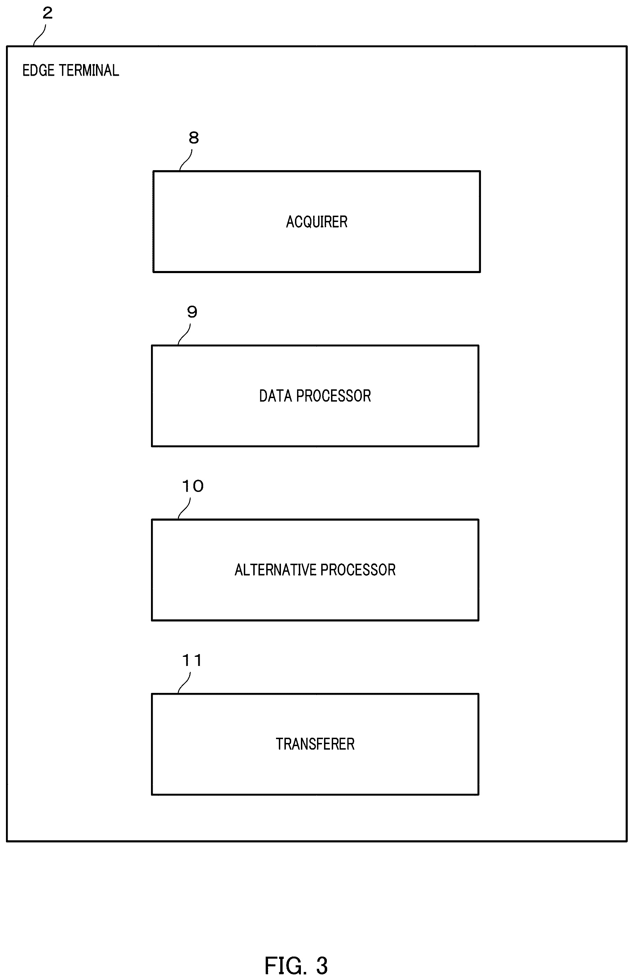

Next, the configuration of the edge terminal 2 will be described in detail. As illustrated in Fig. 3, the edge terminal 2 includes an acquirer 8, a data processor 9, an alternative processor 10, and a transferer 11. The edge terminal 2 is connected to the edge terminal 1 and the server 3 via a network in a linkable manner. Note that, the acquirer 8 and the data processor 9 have the same configurations as the acquirer 4 and the data processor 5 in the edge terminal 1, and thus, descriptions thereof will be omitted.

The alternative processor 10 performs, based on the request for alternative processing received from the edge terminal 1, the alternative processing on the acquired data acquired by the edge terminal 1. For example, the alternative processor 10 may input, based on the request for alternative processing, the acquired data to a machine learning-trained model having a data processing function equivalent to that of the machine learning-trained model in the edge terminal 1, and may acquire the processing result as processing data.

The transferer 11 transfers the processing data, on which the alternative processing has been performed, to the server 3. At this time, the transferer 11 may transfer the processing data to the server 3 directly. In addition, the transferer 11 may transfer the processing data to the server 3 via the edge terminal 1.

Note that, the edge terminal 1 may further include the alternative processor 10 and the transferer 11 in the edge terminal 2. In the same manner, the edge terminal 2 may further include the receiver 6 and the processing requester 7 in the edge terminal 1. That is, the edge terminal 1 and the edge terminal 2 may have the same configuration.

The server 3 manages the edge terminals 1 and 2. For example, the server 3 may aggregate and manage the processing data transmitted from the edge terminals 1 and 2. In addition, the server 3 may monitor the states of the edge terminals 1 and 2. In addition, the server 3 may provide, based on the processing data, a monitoring result to a user (for example, an administrator of the monitoring target M) who utilizes the edge terminal 1. As described above, the server 3 may be formed of a cloud such as an Internet of Thing (IoT) platform.

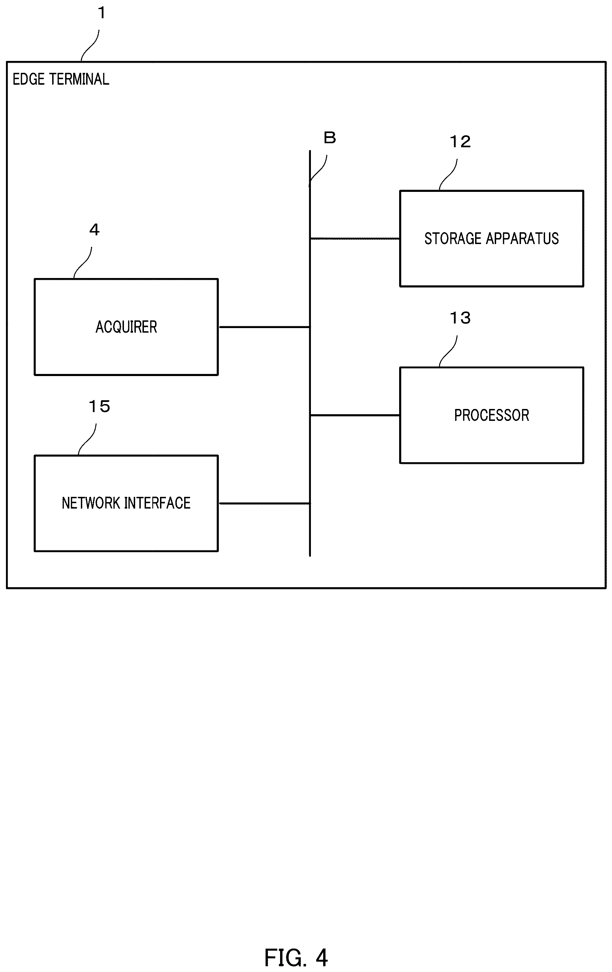

Next, the hardware configuration of the edge terminal 1 will be described in detail. For example, as illustrated in Fig. 4, the edge terminal 1 may include a storage apparatus 12, a processor 13, the acquirer 4, and a network interface 15, which are connected to each other via a bus B.

Note that, programs or instructions for implementing various functions and pieces of processing of the edge terminal 1 may be downloaded from any external apparatus via a network or the like. In addition, the programs or instructions for implementing various functions and pieces of processing of the edge terminal 1 may be provided from a detachable storage medium such as a compact disk-read only memory (CD-ROM) or a flash memory.

The storage apparatus 12 may be implemented by one or more non-transitory storage media such as a random access memory, a flash memory, or a storage apparatus (for example, a hard disk drive). Then, the storage apparatus 12 may store, together with an installed program or instruction, a file, data, or the like used for executing the program or instruction.

The processor 13 may be implemented by one or more central processing units (CPUs), which may be formed of one or more processor cores, a graphics processing unit (GPU), processing circuitry, or the like. The processor 13 executes various functions and pieces of processing of the edge terminal 1 according to programs and instructions stored in the storage apparatus 12, data such as programs or parameters (for example, parameters necessary for executing instructions), and the like.

The acquirer 4 may be formed of, for example, a sensor such as a camera, a thermometer, a barometer, an accelerometer, a pressure gauge, or a gas detector. For example, the acquirer 4 may include a camera and another sensor (for example, a thermometer) disposed therein, respectively.

The network interface 15 is an interface for communicating with an external apparatus via a wired or wireless network.

Note that, the above-described hardware configuration is merely an example, and the edge terminal 1 according to the present disclosure may be implemented by any other appropriate hardware configuration. In addition, the edge terminal 2 has the same hardware configuration as the edge terminal 1, and thus, a description thereof will be omitted.

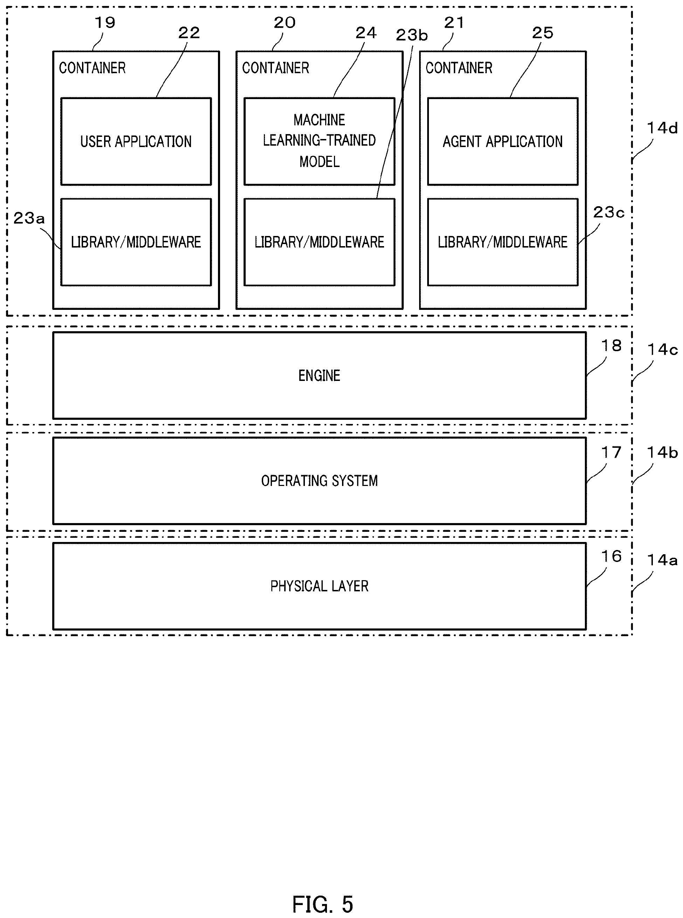

Next, the software configuration of the edge terminal 1 will be described in detail. For example, as illustrated in Fig. 5, the edge terminal 1 may include a physical layer 16, an operating system (OS) 17, an engine 18, and containers 19 to 21. The physical layer 16, the operating system (OS) 17, the engine 18, and the containers 19 to 21 have a sequentially stacked hierarchical structure and form layers 14a to 14d.

The physical layer 16 executes transmission and reception of data. For example, the physical layer 16 may execute modulation, demodulation, encoding, decoding, analog-to-digital (AD) conversion, digital-to-analog (DA) conversion, or the like.

The operating system 17 is a host OS for operating the engine 18, and is deployed on the physical layer 16. For example, the operating system 17 may manage a driver or the like that causes the engine 18 to operate the edge terminal 1 generally.

The engine 18 operates the containers 19 to 21 on the operating system 17 that is common. For example, the engine 18 may form a virtual network and may establish communication among the containers 19 to 21 via the virtual network. At this time, the engine 18 may manage exchange of data among the containers 19 to 21. Note that, a container may include a machine learning-trained model 24, and is not limited to that which is formed of the three containers 19 to 21. That is, the engine 18 is not limited to that which operates the three containers 19 to 21.

The container 19 is formed by packaging a user application 22 and a library/middleware 23a. The user application 22 pre-processes data to be input into the machine learning-trained model in the container 20. In addition, the user application 22 may process data based on a setting(s) customized by a user (for example, an administrator of the monitoring target M) who utilizes the edge terminal 1. The library/middleware 23a is for operating the user application 22, and may include some of the functions of the operating system 17. For example, the library/middleware 23a may include a basic command set or file system of the operating system 17, and the like.

The container 20 is formed by packaging the machine learning-trained model 24 and a library/middleware 23b. The machine learning-trained model 24 is a model trained for a specific task (for example, target detection, abnormality detection, dangerousness detection, or the like), and processes acquired data acquired by the acquirer 4. The machine learning-trained model 24 may be formed of, for example, an artificial intelligence (AI) model. For example, the machine learning-trained model 24 may determine input acquired data by using an AI logic and may output the determination result. The library/middleware 23b is for operating the machine learning-trained model 24, and may include some of the functions of the operating system 17 in the same manner as the library/middleware 23a.

The container 21 is formed by packaging an agent application 25 and a library/middleware 23c. The agent application 25 may include a module that controls communication between the edge terminal 1 and the server 3. The library/middleware 23c is for operating the agent application 25, and may include some of the functions of the operating system 17 in the same manner as the library/middleware 23a.

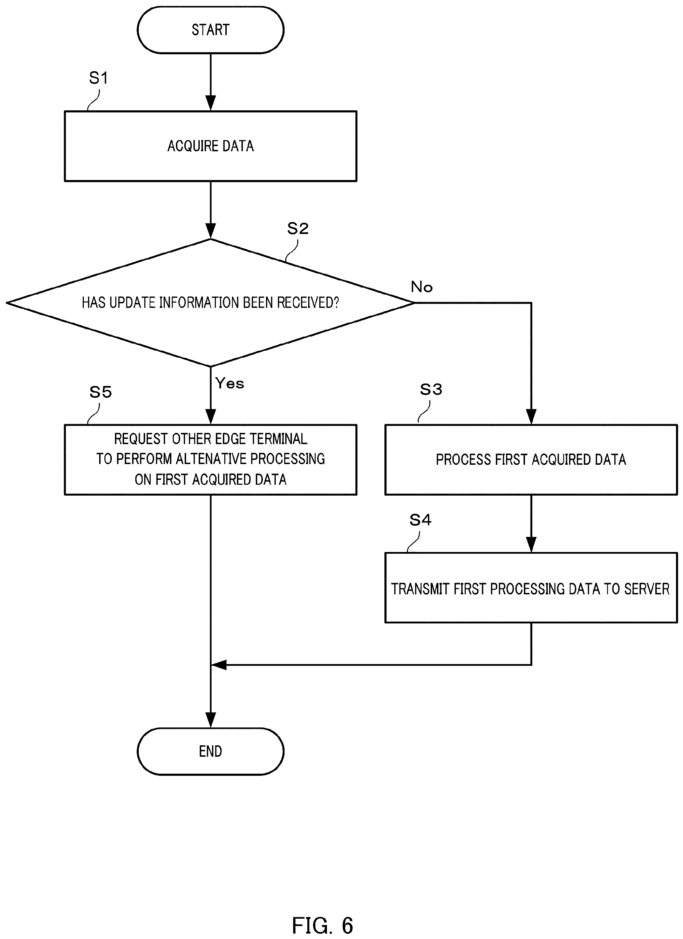

Next, processing on acquired data by the edge terminal 1 will be described with reference to the flowchart illustrated in Fig. 6.

First, the acquirer 4 of the edge terminal 1 illustrated in Fig. 2 acquires data (S1). For example, it is assumed that the edge terminal 1 is formed of a camera provided for the monitoring target M such as a factory. At this time, the edge terminal 1 may also be provided with any other sensor such as a thermometer. The acquirer 4 may, for example, images a worker working at the monitoring target M and may acquire image data thereof sequentially. In addition, the acquirer 4 may measure the temperature of the environment in which a worker works at the monitoring target M and may acquire temperature data thereof sequentially. The acquirer 4 outputs this first acquired data to the data processor 5.

When the data processor 5 receives an input of the first acquired data from the acquirer 4, the data processor 5 determines whether update information has been received from the server 3 (S2). When the data processor 5 determines that no update information has been received, the data processor 5 processes the first acquired data based on a predetermined processing method (S3).

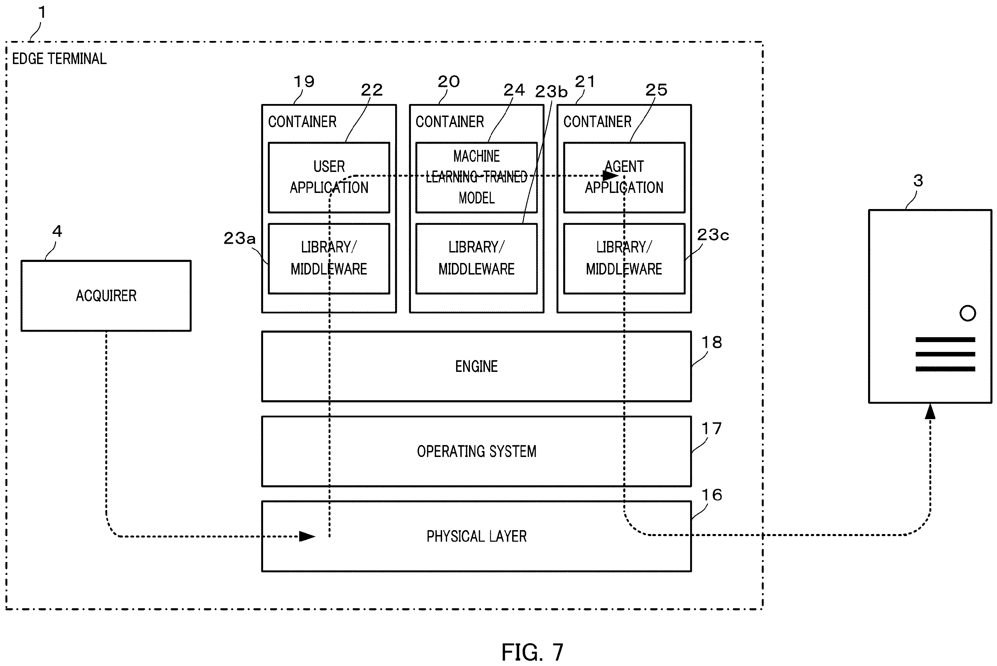

For example, as illustrated in Fig. 7, the first acquired data acquired by the acquirer 4 may be input to the user application 22 of the container 19 via the physical layer 16, the operating system 17, and the engine 18. The user application 22 pre-processes the input first acquired data such that the first acquired data can be processed at the machine learning-trained model 24. Then, the pre-processed first acquired data is input to the machine learning-trained model 24. When the pre-processed first acquired data is input to the machine leaning-trained model 24, the machine learning-trained model 24 outputs a processing result corresponding to the first acquired data. For example, when image data obtained by imaging how a worker works is input to the machine leaning-trained model 24, the machine learning-trained model 24 may output a determination result obtained by determining the dangerousness of the work of the worker. In addition, when temperature data of the environment in which a worker works is input to the machine leaning-trained model 24, the machine learning-trained model 24 may output a determination result obtained by determining the dangerousness of the worker working at the temperature.

When the first acquired data is processed in the above-described manner, the agent application 25 of the container 21 sequentially transmits the first processing data to the server 3 via the engine 18, the operating system 17, and the physical layer 16 (S4). Thus, the first processing data is transmitted from the network interface 15 to the server 3. At this time, the agent application 25 may transmit processing information, which indicates that the first processing data has been processed at the edge terminal 1, and the first processing data to the server 3. For example, the agent application 25 may add, as metadata, processing information (for example, version information, identification information, and the like of the edge terminal 1 or a module for processing) to the first processing data.

On the other hand, in a case where the data processor 5 determines in step S2 that update information has been received, the processing requester 7 requests the other edge terminal 2 to perform alternative processing on the first acquired data (S5). For example, in a case where a specific application installed in the edge terminal 1 is updated, the server 3 transmits update information to the edge terminal 1. Note that, examples of the update information include information for adding a function to a specific application, information for correcting a defect of a specific application, and information for improving the security of a specific application. Thus, when update information of a specific application is received by the receiver 6 of the edge terminal 1, the data processor 5 determines that update information has been received. At this time, the edge terminal 1 updates the specific application while processing the first acquired data, and may have an insufficient memory region. In this respect, when the data processor 5 determines that update information has been received, the data processor 5 outputs the first acquired data and the update information to the processing requester 7.

Note that, the data processor 5 may calculate resources to be used for the update based on the update information. For example, the data processor 5 may calculate the storage capacity, the work memory capacity, the necessity of reboot, and the like. Then, in a case where the data processor 5 determines that the region for deploying update information will be is insufficient, the data processor 5 may output the first acquired data and the update information to the processing requester 7. In addition, the edge terminal 1 may acquire, from the server 3, resource information to be used for the update together with the update information. Thus, the data processor 5 can determine whether the region for deploying update information will be insufficient without calculating resources to be used for the update.

Here, it is assumed that the update information is for updating a specific applications included in the containers 19 to 21. For example, the update information may be for updating the machine learning-trained model 24 of the container 20 in the container environment.

Then, when the processing requester 7 receives inputs of the first acquired data and the update information, the processing requester 7 requests the edge terminal 2 to perform alternative processing on the first acquired data by using the machine learning-trained model 24 in the edge terminal 2. Since resources to be used for the update are secured thereby, the data processor 5 can update the machine learning-trained model 24 easily.

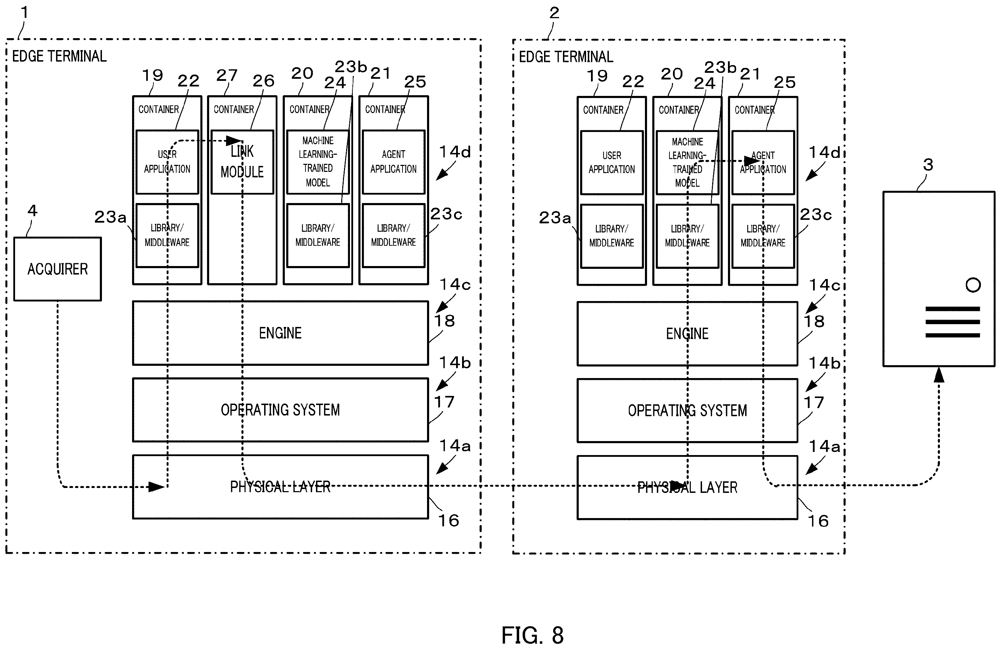

At this time, the processing requester 7 may activate, based on the update information, a link module in a layer corresponding to specific software to be updated. That is, the processing requester 7 may activate a link module in the same layer as or a lower layer than specific software. For example, as illustrated in Fig. 8, the processing requester 7 may activate a container 27 including a link module 26 in the layer 14d that is the same layer as the machine learning-trained model 24 to be updated. At this time, the processing requester 7 activates the link module 26 such that the link module 26 processes the first acquired data ahead of the machine learning-trained model 24. For example, the processing requester 7 may activate the link module 26 such that the link module 26 processes the first acquired data immediately after the user application 22.

Thus, the first acquired data pre-processed at the user application 22 is input to the link module 26. Here, the link module 26 links with the other edge terminal 2 having a processing function equivalent to that of the edge terminal 1 to transmit the first acquired data on the layer 14d to the edge terminal 2. For example, the link module 26 may include unique information and an operation function of the edge terminal 1 such as a network function for linking with the edge terminal 2 or identification information of the edge terminal 1. For example, the link module 26 may include a routing application for transferring the first acquired data to the edge terminal 2. As described above, since the link module 26 can operate with relatively small resources for transmitting the first acquired data or the like, it is possible to reliably update the machine learning-trained model 24.

Specifically, when the link module 26 is activated in the layer 14d, the link module 26 searches for the other edge terminal 2 having a processing function equivalent to that of the edge terminal 1. For example, address information of the other edge terminal 2 and the like may be registered in the link module 26 in advance. The link module 26 may search for the edge terminal 2 based on the information registered in advance.

When the link module 26 specifies the edge terminal 2, the link module 26 rearranges the order of the processing of the first acquired data (for example, the order of pipeline processing). For example, the link module 26 may rearrange the order of the processing of the first acquired data such that the processing at and after the machine learning-trained model 24 (the processing after the user application 22) is performed at the edge terminal 2. Then, the link module 26 requests the edge terminal 2 to perform alternative processing at and after the machine learning-trained model 24.

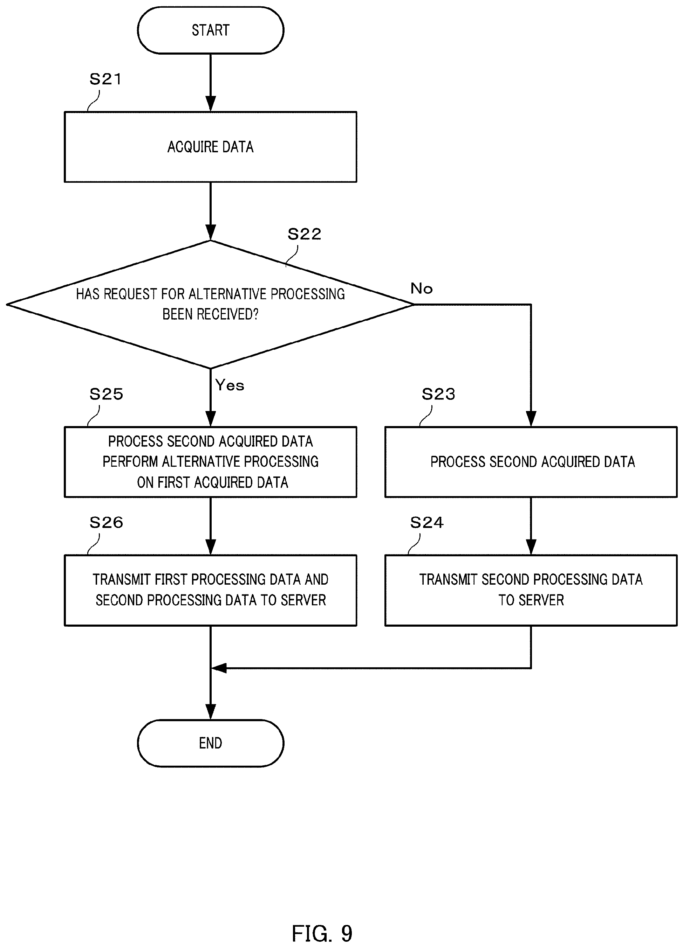

Next, processing of acquired data by the edge terminal 2 will be described with reference to the flowchart illustrated in Fig. 9.

In the same manner as the acquirer 4 of the edge terminal 1, the acquirer 8 of the edge terminal 2 illustrated in Fig. 3 acquires data (S21). Note that, the edge terminal 2 may be provided for the same monitoring target M as that for the edge terminal 1. The acquirer 8 outputs the acquired second acquired data to the data processor 9.

Here, the data processor 9 determines whether a request for alternative processing on the first acquired data has been received from the other edge terminal 1 (S22). When the data processor 9 determines that a request for alternative processing has not been received, the data processor 9 processes the second acquired data based on a predetermined processing method (S23). For example, in the same manner as in the edge terminal 1 illustrated in Fig. 7, the data processor 9 may process the second acquired data, which is sequentially acquired by the acquirer 8, by using the machine learning-trained model 24. Note that, the processing procedure of the second acquired data is the same as that in the edge terminal 1, a description thereof will be omitted. When the second acquired data is processed, the edge terminal 2 transmits second processing data thereof to the server 3 (S24).

On the other hand, in a case where it is determined in step S22 that a request for alternative processing has been received, the data processor 9 processes the second acquired data, and the alternative processor 10 performs alternative processing on the first acquired data (S25). For example, when a request for alternative processing is received from the edge terminal 1, the alternative processor 10 may determine, based on the request, whether alternative processing can be performed. The alternative processor 10 may determine whether alternative processing can be performed, for example, based on resources used in the alternative processing. In a case where the alternative processor 10 determines that the alternative processing cannot be performed, the alternative processor 10 transmits, to the edge terminal 1, an answer indicating that the alternative processing cannot be accepted. In a case where the link module 26 of the edge terminal 1 has received the answer indicating that the alternative processing cannot be accepted, the link module 26 of the edge terminal 1 may search for another edge terminal having a processing function equivalent to that of the edge terminal 1 again.

In addition, in a case where the alternative processor 10 has determined that the alternative processing can be performed, the alternative processor 10 establishes a mode for accepting the alternative processing based on the processing procedure of the first acquired data, and transmits, to the edge terminal 1, an answer indicating that the alternative processing is acceptable. In a case where the link module 26 of the edge terminal 1 has received the answer indicating that the alternative processing is acceptable, the link module 26 of the edge terminal 1 sequentially transmits the first acquired data on the activated layer 14d to the edge terminal 2. At this time, the link module 26 has been activated so as to process the first acquired data ahead of the machine learning-trained model 24. For this reason, the first acquired data is pre-processed at the user application 22 and then transmitted to the edge terminal 2 without being processed at the machine learning-trained model 24.

As described above, the link module 26 is activated in the layer 14d of the machine learning-trained model 24 to be updated, and transmits the first acquired data on the activated layer 14d to the edge terminal 2. Thus, the processing requester 7 of the edge terminal 1 can transmit the first acquired data to the edge terminal 2 before the first acquired data is processed in the layer 14d to be updated.

Here, the data processor 5 of the edge terminal 1 may start the update of the machine learning-trained model 24 based on the update information after starting the transmission of the first acquired data to the edge terminal 2. By the transmission of the first acquired data, resources to be used for the update are secured, and thus, the data processor 5 can more easily update the machine learning-trained model 24.

On the other hand, the edge terminal 2 receives the first acquired data transmitted from the edge terminal 1. Then, the alternative processor 10 inputs the first acquired data to the machine learning-trained model 24 of the container 20 via the physical layer 16, the operating system 17, and the engine 18 based on the processing procedure included in the request for alternative processing. That is, the alternative processor 10 inputs the first acquired data to the machine learning-trained model 24 without passage through the user application 22 of the edge terminal 2. Thus, the machine learning-trained model 24 outputs the same processing result as that of the machine learning-trained model 24 of the edge terminal 1, and sequentially performs alternative processing on the first acquired data.

As described above, in a case where the container environment of the edge terminal 1 is updated, the processing requester 7 of the edge terminal 1 transmits the first acquired data such that the first acquired data is processed, instead of the container environment in the edge terminal 1, in the container environment in the edge terminal 2. Thus, the edge terminal 2 can appropriately perform alternative processing on the first acquired data by using the machine learning-trained model 24, for example, based on the processing procedure included in the request for alternative processing.

Note that, when a request for alternative processing is received from the edge terminal 1, the processing requester 7 may temporarily increase the data processing amount. For example, the processing requester 7 may increase the processing speed of the CPU by the clock-up processing.

When the machine learning-trained model 24 performs alternative processing on the first acquired data, the machine learning-trained model 24 outputs the first processing data thereof to the agent application 25 of the container 21. In addition, when the machine learning-trained model 24 processes the second acquired data acquired by the acquirer 8 of the edge terminal 2, the machine learning-trained model 24 outputs the second processing data thereof to the agent application 25.

Subsequently, the agent application 25 transmits the first processing data to the server 3 via the engine 18, the operating system 17, and the physical layer 16 based on the processing procedure included in the request for alternative processing (S26). At this time, the agent application 25 may transmit processing information, which indicates that alternative processing on the first acquired data acquired by the edge terminal 1 has been performed at the edge terminal 2, and the first processing data to the server 3. For example, the agent application 25 may add, as metadata, processing information (for example, version information, identification information, and the like of the edge terminal 1 or a module for processing) to the first processing data.

In addition, the agent application 25 transmits the second processing data, which has been obtained by processing the second acquired data by using the machine learning-trained model 24, to the server 3 via the engine 18, the operating system 17, and the physical layer 16. At this time, the agent application 25 may transmit processing information, which indicates that the acquired data acquired by the edge terminal 2 has been processed at the edge terminal 2, and the second processing data to the server 3.

When the server 3 receives the first processing data and the second processing data, the server 3 stores the data in the storage. Then, the server 3 may provide a monitoring result to the administrator of the monitoring target M based on the first processing data and the second processing data. For example, in a case where it is determined in the first processing data or the second processing data that there is dangerousness in the work of a worker, the server 3 may transmit the determination result to the terminal of the administrator. At this time, even in a case where the software of the edge terminal 1 is updated, the server 3 can continuously acquire the first processing data by the alternative processing at the edge terminal 2. For this reason, the server 3 can provide the monitoring result to the administrator without interrupting the monitoring of the monitoring target M.

In addition, the update of the edge terminal 1 may affect the alternative processing at the edge terminal 2. For example, it is conceivable that an update such as a change in the determination system of the machine learning-trained model 24 or an increase in the types of determination affects the alternative processing at the edge terminal 2. At this time, the server 3 may determine whether the processing data has been processed before the update or after the update. In this respect, the server 3 can reliably determine the processing timing of the second processing data based on the processing information indicating that the alternative processing has been performed at the edge terminal 2.

On the other hand, when the update of the machine learning-trained model 24 is ended, the data processor 5 of the edge terminal 1 stops the transmission of the first acquired data and transmits an end request of the alternative processing to the edge terminal 2. Thus, the alternative processor 10 of the edge terminal 2 stops the alternative processing on the first acquired data. In addition, the data processor 5 of the edge terminal 1 inputs the first acquired data, which is acquired by the acquirer 4, to the machine learning-trained model 24 of the edge terminal 1. Thus, the edge terminal 1 is switched to the normal processing mode.

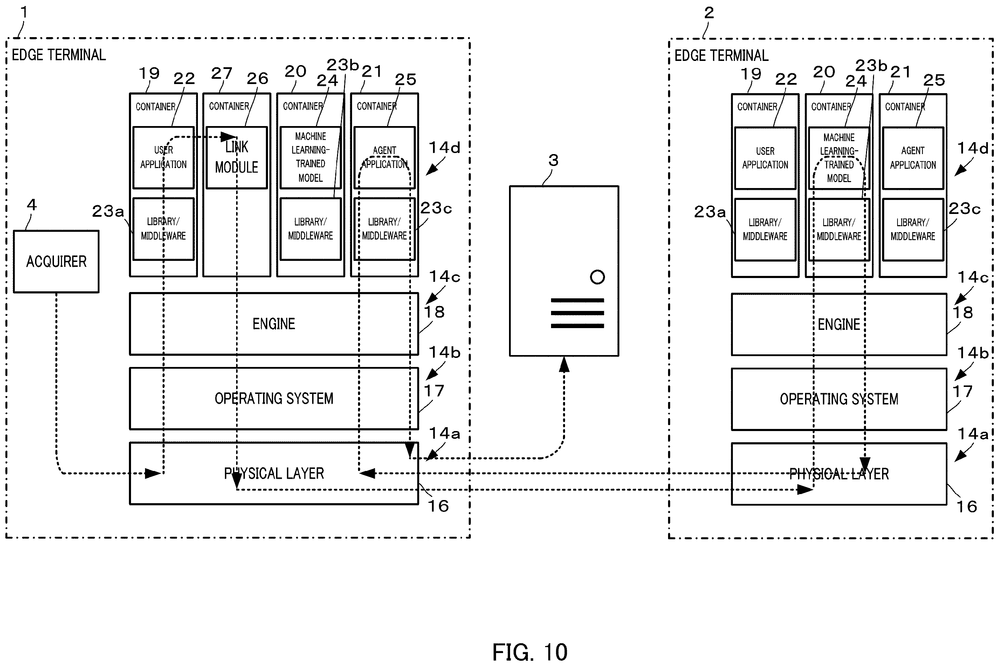

Note that, although the processing requester 7 requests the edge terminal 2 to transmit the first processing data, on which alternative processing has been performed at the edge terminal 2, to the server 3 in the present embodiment, the present disclosure is not limited thereto as long as the edge terminal 2 can perform the alternative processing. For example, the processing requester 7 may request the edge terminal 2 to transmit the first processing data, on which alternative processing has been performed at the edge terminal 2, to the edge terminal 1. For example, as illustrated in Fig. 10, the processing requester 7 may request the edge terminal 2 to transmit the first processing data, which has been processed at the machine learning-trained model 24 to be updated, to the edge terminal 1. Thus, when the alternative processor 10 of the edge terminal 2 performs alternative processing on the first acquired data by using the machine learning-trained model 24, the alternative processor 10 transmits the first processing data to the edge terminal 1 via the engine 18, the operating system 17, and the physical layer 16. When the first processing data is received, the data processor 5 of the edge terminal 1 inputs the first processing data to the agent application 25 of the container 21 via the engine 18, the operating system 17, and the physical layer 16. Then, the agent application 25 may transmit the first processing data to the server 3 via the engine 18, the operating system 17, and the physical layer 16.

According to the present embodiment, the receiver 6 receives update information on a specific application. Then, the processing requester 7 requests the edge terminal 2 to perform the alternative processing on the first acquired data by using the machine learning-trained model 24 in the edge terminal 2. Since resources to be used for the update are secured thereby, the specific application can be easily updated.

### (Embodiment 2)

Hereinafter, Embodiment 2 of the present disclosure will be described. Here, differences from those in Embodiment 1 described above will be mainly described, and common points with those in Embodiment 1 described above will be denoted by common reference signs, and detailed descriptions thereof will be omitted.

Although the processing requester 7 of the edge terminal 1 activates the link module 26 in the layer 14d of the machine learning-trained model 24 in Embodiment 1 described above, the present disclosure is not limited thereto as long as the link module 26 is activated in a layer corresponding to specific software to be updated. In Embodiment 2, in a case where update information for updating the engine 18 has been received, the processing requester 7 activates the link module 26 in the same layer 14c as the engine 18. Thus, the processing requester 7 transmits the first acquired data to the edge terminal 2 before the first acquired data is input to the engine 18.

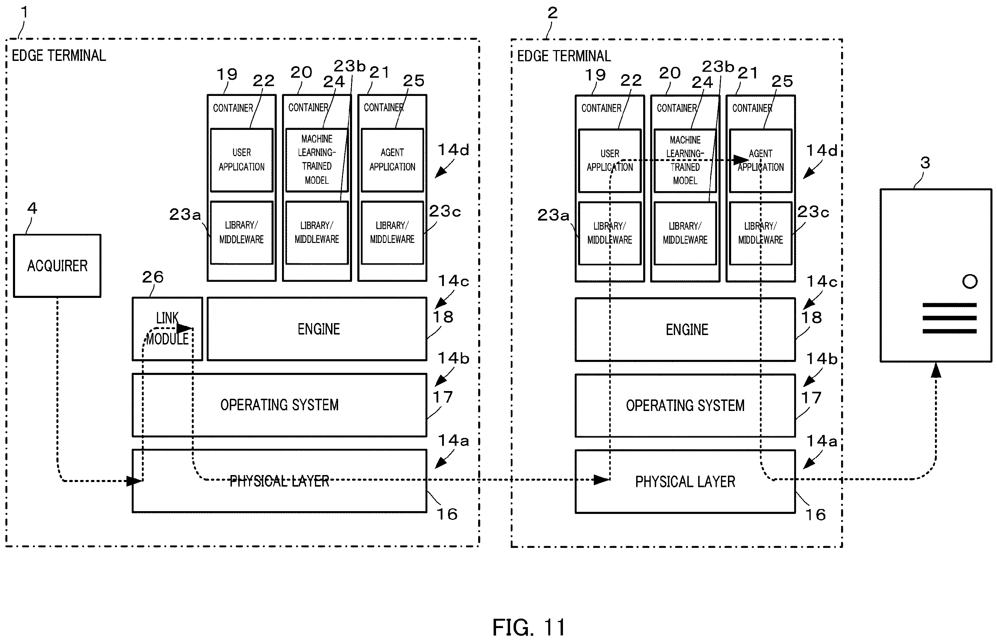

First, in the same manner as in Embodiment 1, in a case where it is determined that update information has been received by the edge terminal 1 (S2), the processing requester 7 activates the link module 26 in the layer corresponding to a specific application to be updated. Here, it is assumed that the server 3 has transmitted update information for updating the engine 18 to the edge terminal 1. That is, the engine 18 and the containers 19 to 21 stop operation due to the update. When the update information for updating the engine 18 that operates the container environment is received, the processing requester 7 may activate the link module 26 in the same layer 14c as the engine 18, as illustrated in Fig. 11. At this time, the processing requester 7 activates the link module 26 such that the link module 26 processes the first acquired data ahead of the engine 18. That is, the link module 26 functions in place of the engine 18. Thus, the first acquired data acquired by the acquirer 4 is input to the link module 26 via the physical layer 16 and the operating system 17.

When the first acquired data is input to the link module 26, the link module 26 establishes a link with the edge terminal 2 and requests the edge terminal 2 to perform the alternative processing of the containers 19 to 21. Then, when the data processor 9 of the edge terminal 2 determines that a request for alternative processing has been received (S22), the alternative processor 10 accepts the alternative processing on the first acquired data. Thus, the processing requester 7 of the edge terminal 1 transmits the first acquired data to the edge terminal 2 by the link module 26 before the first acquired data is inputted to the engine 18. As described above, the processing requester 7 can appropriately transmit the first acquired data to the edge terminal 2 in response to the update of the engine 18. When the first acquired data is received, the alternative processor 10 of the edge terminal 2 performs alternative processing on the first acquired data (S25).

At this time, the alternative processor 10 inputs the first acquired data to the user application 22 of the container 19 via the physical layer 16, the operating system 17, and the engine 18 based on the processing procedure included in the request for alternative processing. The user application 22 pre-processes the input first acquired data. Then, the machine learning-trained model 24 performs alternative processing on the pre-processed first acquired data. When the alternative processing has been performed on the first acquired data, the agent application 25 transmits the first processing data thereof to the server 3 via the engine 18, the operating system 17, and the physical layer 16 (S26).

According to the present embodiment, in a case where update information for updating the engine 18 that operates the container environment including the machine learning-trained model 24 has been received, the processing requester 7 transmits the first acquired data to the edge terminal 2 before the first acquired data is input to the engine 18. Thus, the processing requester 7 can appropriately transmit the first acquired data to the edge terminal 2 in response to the update of the engine 18.

### (Embodiment 3)

Hereinafter, Embodiment 3 of the present disclosure will be described. Here, differences from those in Embodiments 1 and 2 described above will be mainly described, and common points with those in Embodiments 1 and 2 described above are denoted by common reference signs, and detailed descriptions thereof will be omitted.

In Embodiment 3, in a case where update information for updating the operating system 17 has been received, the processing requester 7 activates the link module 26 in the same layer 14b as the operating system 17. Thus, the processing requester 7 transmits the first acquired data to the edge terminal 2 before the first acquired data is input to the operating system 17.

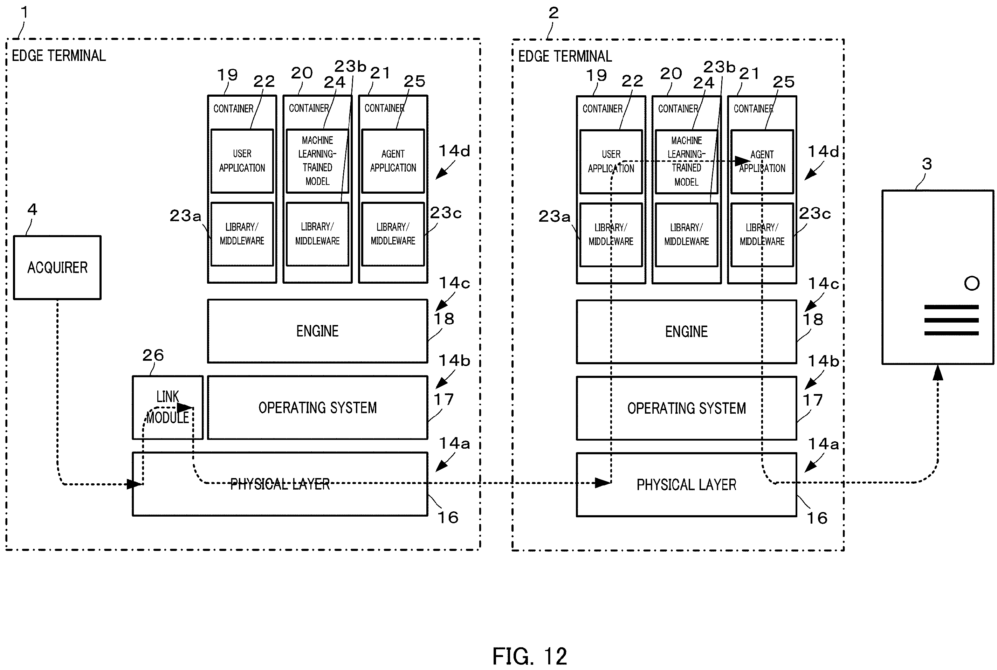

First, in the same manner as in Embodiment 1, in a case where it is determined that update information has been received by the edge terminal 1 (S2), the processing requester 7 activates the link module 26 in the layer corresponding to a specific application to be updated. Here, it is assumed that the server 3 has transmitted update information for updating the operating system 17 to the edge terminal 1. Thus, the operating system 17, the engine 18, and the containers 19 to 21 stop operation due to the update. In a case where the update information for updating the operating system 17 has been received, the processing requester 7 may activate the link module 26 in the same layer 14a as the operating system 17, as illustrated in Fig. 12. At this time, the processing requester 7 activates the link module 26 such that the link module 26 processes the first acquired data ahead of the operating system 17. Thus, the first acquired data acquired by the acquirer 4 is input to the link module 26 via the physical layer 16. Note that, the link module 26 may include a driver of the acquirer 4 (for example, a sensor or the like) in the operating system 17, unique information and an operation function of the edge terminal 1 such as a network function for linking with the edge terminal 2 or identification information of the edge terminal 1.

When the first acquired data is input to the link module 26, the link module 26 establishes a link with the edge terminal 2 and requests the edge terminal 2 to perform the alternative processing of the containers 19 to 21. Then, when the data processor 9 of the edge terminal 2 determines that the request for alternative processing has been received (S22), the alternative processor 10 accepts the alternative processing on the first acquired data. Thus, the processing requester 7 of the edge terminal 1 transmits the first acquired data to the edge terminal 2 by the link module 26 before the first acquired data is input to the operating system 17. As described above, the processing requester 7 can appropriately transmit the first acquired data to the edge terminal 2 in response to the update of the operating system 17. When the first acquired data is received, the alternative processor 10 of the edge terminal 2 performs alternative processing on the first acquired data (S25). Then, the alternative processor 10 transmits the first processing data, on which the alternative processing has been performed, to the server 3 (S26).

According to the present embodiment, in a case where update information for updating the operating system 17 has been received, the processing requester 7 transmits the first acquired data to the edge terminal 2 before the first acquired data is inputted to the operating system 17. Thus, the processing requester 7 can appropriately transmit the first acquired data to the edge terminal 2 in response to the update of the operating system 17.

### (Embodiment 4)

Hereinafter, Embodiment 4 of the present disclosure will be described. Here, differences from those in Embodiments 1 to 3 described above will be mainly described, and common points with those in Embodiments 1 to 3 described above will be denoted by common reference signs, and detailed descriptions thereof will be omitted.

Although the machine learning-trained models 24 in the edge terminals 1 and 2 process the acquired data in the container environment in Embodiments 1 to 3 described above, the present disclosure is not limited thereto as long as the acquired data can be processed. In Embodiment 4, for example, the machine learning-trained models 24 in the edge terminals 1 and 2 may process acquired data in a virtual environment. Then, the processing requester 7 of the edge terminal 1 may receive update information for updating the virtual environment including the machine learning-trained model 24. In this case, the processing requester 7 may transmit the first acquired data to the edge terminal 2 such that the first acquired data is processed, instead of the virtual environment in the edge terminal 1, in a virtual environment including the machine learning-trained model 24 in the edge terminal 2.

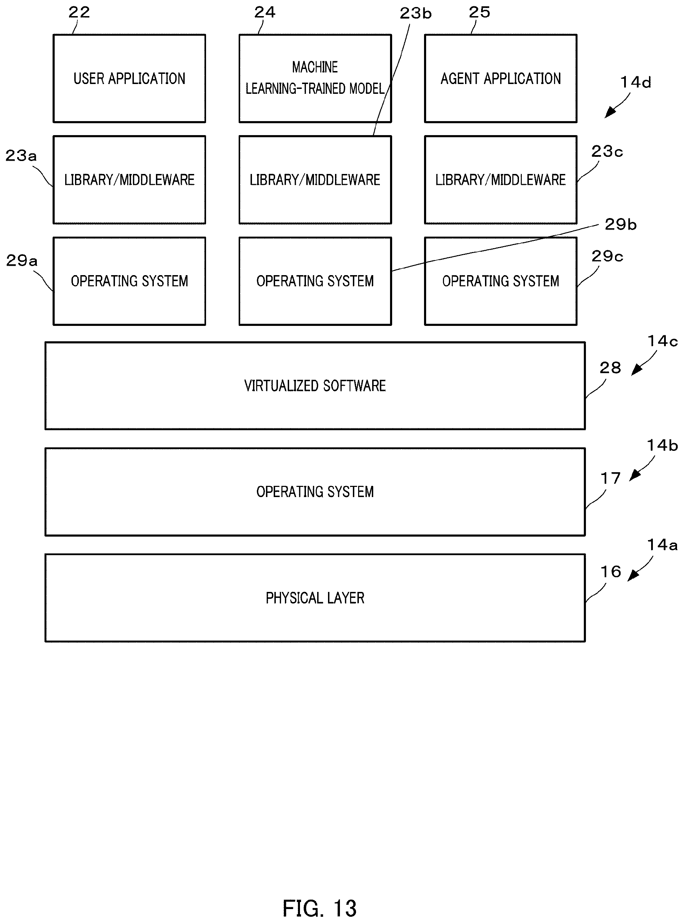

For example, as illustrated in Fig. 13, the edge terminals 1 and 2 may be provided with virtualized software 28 instead of the engine 18 in Embodiments 1 to 3. In addition, the edge terminals 1 and 2 may be provided with operating systems 29a to 29c in place of the containers 19 to 21.

The virtualized software 28 virtually implements a physical server that operates the operating systems 29a to 29c, and constructs an operation environment of the operating systems 29a to 29c. For example, the virtualized software 28 may activate each of the operating systems 29a to 29c under the control of the operating system 17.

The operating systems 29a to 29c function as a guest OS for the operating system 17 of the host OS. For example, the operating systems 29a to 29c may manage the operating environments of the user application 22, the machine learning-trained model 24, and the agent application 25, respectively.

For example, in a case where update information for updating the virtual environment including the machine learning-trained model 24 has been received, the processing requester 7 activates the link module 26 in the same layer 14d as the virtual environment. Here, it is assumed that the server 3 has transmitted update information for updating the machine learning-trained model 24 to the edge terminal 1. In a case where the update information for updating the machine learning-trained model 24 has been received, the processing requester 7 activates the link module 26 such that the link module 26 processes the first acquired data ahead of the machine learning-trained model 24. Thus, the first acquired data is pre-processed at the user application 22, and then transmitted to the edge terminal 2 without being processed at the machine learning-trained model 24. That is, the processing requester 7 transmits the first acquired data such that the first acquired data is processed, instead of the virtual environment in the edge terminal 1, in the virtual environment including the machine learning-trained model 24 in the edge terminal 2. For this reason, the edge terminal 2 can appropriately perform alternative processing on the first acquired data by using the machine learning-trained model 24, for example, based on the processing procedure included in the request for alternative processing.

According to the present embodiment, the receiver 6 receives update information for updating a virtual environment including the machine learning-trained model 24. In this case, the processing requester 7 transmits the first acquired data to the edge terminal 2 such that the first acquired data is processed, instead of the virtual environment in the edge terminal 1, in a virtual environment including the machine learning-trained model 24 in the edge terminal 2. Thus, the processing requester 7 can appropriately perform alternative processing on the first acquired data by using the machine learning-trained model 24, for example, based on the processing procedure included in the request for alternative processing.

Although specific examples of the present disclosure have been described in detail above, these are merely exemplified specific examples and do not limit the scope of the claims. The technology recited in the claims includes various modifications and alterations of the specific examples exemplified above.

The present application is based on Japanese Patent Application No. 2023-101718 filed on June 21, 2023, the contents of which are incorporated herein by reference.

### Industrial Applicability

An edge terminal according to the present disclosure can be utilized as a terminal that processes acquired data by using a machine learning-trained model.

### Reference Signs List

1, 2 Edge terminal
3 Server
4, 8 Acquirer
5, 9 Data processor
6 Receiver
7 Processing requester
10 Alternative processor
11 Transferer
12 Storage apparatus
13 Processor
14a to 14d Layer
15 Network interface
16 Physical layer
17 Operating system
18 Engine
19, 20, 21, 27 Container
22 User application
23a to 23c Library/middleware
24 Machine learning-trained model
25 Agent application
26 Link module
28 Virtualized software
29a to 29c Operating system

## Claims

1. An edge terminal that forms a first edge terminal in a system, wherein the first edge terminal includes a machine learning-trained model and processes acquired data, and the system includes: the first edge terminal; a second edge terminal that is linkable with the first edge terminal via a network; and a server that is linkable with the first edge terminal and the second edge terminal via the network, the edge terminal comprising:
a receiver that receives update information of specific software; and
a processing requester that, upon receiving the update information, makes a request to the second edge terminal to perform alternative processing on the acquired data by using the machine learning-trained model in the second edge terminal.

2. The edge terminal according to claim 1, wherein:
the processing requester activates, based on the update information, a link module in a specific layer corresponding to the specific software to be updated, and
the link module transmits the acquired data on the specific layer to the second edge terminal.

3. The edge terminal according to claim 2, wherein
in a case where the update information for updating a container environment or a virtual environment including the machine learning-trained model has been received, the processing requester transmits the acquired data to the second edge terminal such that the acquired data is processed, instead of the container environment or the virtual environment in the first edge terminal, in a container environment or a virtual environment including the machine learning-trained model in the second edge terminal.

4. The edge terminal according to claim 2, wherein
in a case where the update information for updating an engine that operates a container environment or a virtual environment including the machine learning-trained model has been received, the processing requester transmits the acquired data to the second edge terminal before the acquired data is input to the engine.

5. The edge terminal according to claim 2, wherein
in a case where the update information for updating an operating system has been received, the processing requester transmits the acquired data to the second edge terminal before the acquired data is input to the operating system.

6. A system, comprising:
the first edge terminal according to claim 1;
the second edge terminal according to claim 1; and
the server according to claim 1, wherein
the second edge terminal includes:
an alternative processor that performs alternative processing on the acquired data based on the request received from the first edge terminal; and
a transferer that transfers processing data to the server, the processing data being processing data on which the alternative processing has been performed.

7. The system according to claim 6, wherein
the transferer transmits processing information and the processing data to the server, the processing information indicating that the alternative processing has been performed at the second edge terminal.

8. The system according to claim 6, wherein
when the request is received from the first edge terminal, the alternative processor temporarily increases a data processing amount.

9. A data processing method, which is executed by a computer and whereby a first edge terminal that includes a machine learning-trained model and processes acquired data processes the acquired data in a system including: the first edge terminal; a second edge terminal that is linkable with the first edge terminal via a network; and a server that is linkable with the first edge terminal and the second edge terminal via the network, the data processing method comprising:
receiving update information of specific software; and
requesting, upon receiving the update information, the second edge terminal to perform alternative processing on the acquired data by using the machine learning-trained model in the second edge terminal.
